# EUROPEAN PATENT SPECIFICATION

(11) **EP 3 664 929 B1**
(45) Date of publication and mention of the grant of the patent: **25.08.2021**
(21) Application number: 18742780.2
(22) Date of filing: 17.07.2018
(51) Int. Cl.: B01J 19/24, B01J 3/03, C08F 2/00, B01J 19/00

(54) **POLYMERIZATION UNIT WITH IMPROVED MANHOLE**
POLYMERISIERUNGSEINHEIT MIT VERBESSERTEM SCHACHT
UNITÉ DE POLYMÉRISATION À TROU D'HOMME AMÉLIORÉ

(30) Priority: 10.08.2017 EP 17185700
(43) Date of publication of application: 17.06.2020
(73) Proprietor: Basell Poliolefine Italia S.r.l., 20127 Milano (IT)
(72) Inventor: BONACCORSI, Gian Luca, 44122 Ferrara (IT); PENZO, Giuseppe, 46010 Montanara di Curtatone (MN) (IT); BALESTRA, Enrico, 44122 Ferrara (IT); DORINI, Maurizio, 44122 Ferrara (IT); RINALDI, Riccardo, 44122 Ferrara (IT)
(74) Representative: LyondellBasell
(86) International application number: PCT/EP2018/069381
(87) International publication number: WO 2019/029955

(56) References cited:
- CN-U- 204 510 281
- GB-A- 203 369
- JP-A- 2003 103 108

## Description

### FIELD OF THE INVENTION

The present disclosure relates to a polymerization unit comprising an improved manhole. In some embodiments, the disclosure relates to a gas-phase polymerization unit comprising an improved manhole.

### BACKGROUND OF THE INVENTION

The gas-phase polymerization of olefins, e.g. ethylene, propylene, butene and/or higher olefins, is carried out in polymerization plants comprising several units, including reactors, cyclones, filters, and tanks. To carry out the inspection or maintenance of such units it may be necessary to access the inside of the unit through manholes.

As described herein, a manhole is a cylindrical body closed by a cover and mounted on an opening in the wall of a polymerization unit.

In the present description, the terms "units of a polymerization plant" or "polymerization unit" are used interchangeably and refer to any apparatus or device that contains the polymer which is being formed, or is already formed as a result of the polymerization reaction, both in a resting state or in a transfer state. A polymerization unit may comprise reactors, transfer lines, filters, and tanks, without being limited to these components. In the following description, for the sake of simplicity, reference is made to a reactor, but it is understood that any other unit in which a polymer is formed, or flows in the gas-phase, is encompassed by the terms "units of a polymerization plant" or "polymerization unit" used in the present description.

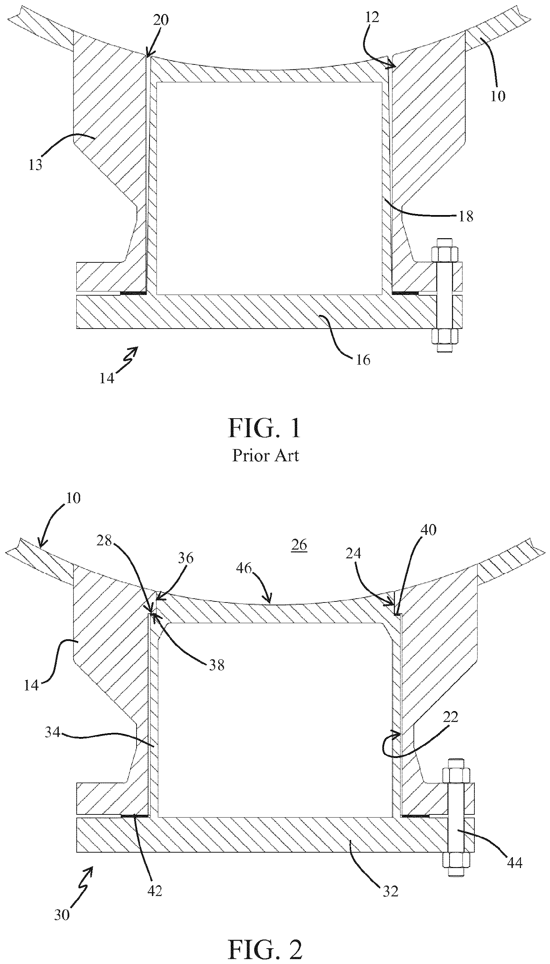

As shown in Fig. 1, a commercially available manhole comprises a hollow body mounted on an opening in the wall of polymerization unit, closed by a closure member. The closure member comprises a plug having a conical shape, with the tapered part directed toward the inside of the polymerization unit, such as toward the reactor. The conical shape ensures an easy removal of the closure member from the opening. In polymerization units, however, reactive polymer particles, including fine particles, may fill the circumferential gap between the opening in the wall of the reactor and the conical part of the plug. These particles may seal the closure member to the reactor wall and make difficult, and time-consuming, the opening of the manhole. Moreover, chunks of polymer particles can detach from the wall and drop into the reactor, possibly blocking the discharge lines of the reactor. These issues can create serious problems related to the operation of the reactor, besides rendering inspection and maintenance activities more difficult and time-consuming.

Document JP2003103108 discloses a manhole of a distilling column which is heated during distillation of easily polymerizable material.

There is a need, therefore, for an improved manhole structure for the polymerization units of gas-phase polymerization plants to ensure optimum plant performance and safety.

### SUMMARY OF THE INVENTION

In some embodiments, the present disclosure provides for a polymerization unit comprising an improved manhole mounted on an opening in a wall of said polymerization unit, said manhole comprising a hollow body mounted in said opening and projecting from said wall of said polymerization unit, said hollow body comprising a cylindrical hole aligned with said opening of said polymerization unit, and a closure member provided with a cover plate, wherein:
- said cylindrical hole of said hollow body comprises a first hole portion and a second hole portion in communication with the inside of said polymerization unit, said first hole portion having a diameter (Dh) and said second hole portion having a diameter (dh), said diameter (Dh) of said first hole portion being larger than the diameter (dh) of said second hole portion, whereby a shoulder is formed between said first and second hole portions of said hollow body;
- said closure member comprises a cylindrical plug operatively inserted in said cylindrical hole of said hollow body, said cylindrical plug comprising a first plug portion having a diameter (Dp), and a second plug portion having a diameter (dp), said diameter (Dp) of said first plug portion being larger than diameter (dp) of said second plug portion, said first and second plug portions forming a shoulder operatively abutting against said shoulder formed in said hollow body, said second plug portion having an end wall matching the shape of the inner wall of said polymerization unit, whereby said wall of said polymerization unit is continuous, or substantially continuous, when said closure member is inserted in said flange.

According to additional embodiments, said first plug portion is inserted in said first hole portion with a first clearance, and said second plug portion is inserted in said second hole portion with a second clearance, said second clearance being smaller then said first clearance.

According to a further embodiment, said first hole portion has a length (Lₕ) and said first plug portion has length and (Lp) larger than the length (lₕ) of said second hole portion and the length (lₚ) of said second plug portion, respectively.

In one embodiment, said cylindrical hole comprising said first hole portion and said second hole portion is formed directly in said hollow body.

In a further embodiment, said cylindrical hole comprising said first hole portion and said second hole portion is formed in a sleeve mounted in said hollow body.

### BRIEF DESCRIPTION OF THE DRAWINGS

- Fig. 1 is a schematic representation of a manhole in a unit of a polymerization plant according to the prior art;
- Fig. 2 is a view of a longitudinal section of a manhole according to a first embodiment of the present invention;
- Fig. 2B is a view of as that of Fig. 2 showing dimensions of parts;
- Fig. 3 is an enlarged view of a part of the manhole of Fig. 2;
- Fig. 4 is a schematic view of the manhole of Fig. 2 in the open position;
- Fig. 5 is a view of a longitudinal section of a manhole according to a second embodiment of the present invention; and
- Fig. 6 is an enlarged view of a part of the manhole of Fig. 5.

### DETAILED DESCRIPTION OF THE INVENTION

Fig. 1 shows a manhole in a unit of a polymerization plant according to the prior art; for example, a manhole in a gas-phase polymerization reactor. The reactor wall 10 is provided with an opening through which operators can access the inside of the reactor to carry out inspection and maintenance activities. A hollow body 13 is mounted on the opening of the reactor wall 10 and projects from it. Hollow body 13 is provided with a cylindrical hole 12 for communication with the inside of the reactor.

Hole 12 is closed by closure member 14 consisting of a cover plate 16 and a conical plug 18 inserted in the cylindrical hole 12. The conical plug has the tapered part directed toward the inside of the reactor, thus allowing for removal of the closure member. This structure, however, forms circumferential gap 20 between the opening in the wall of the reactor and the end portion of the closure member, in which polymer particles can deposit and block the closure member, as described above.

These drawbacks of this known device are overcome by a manhole structure according to the present disclosure.

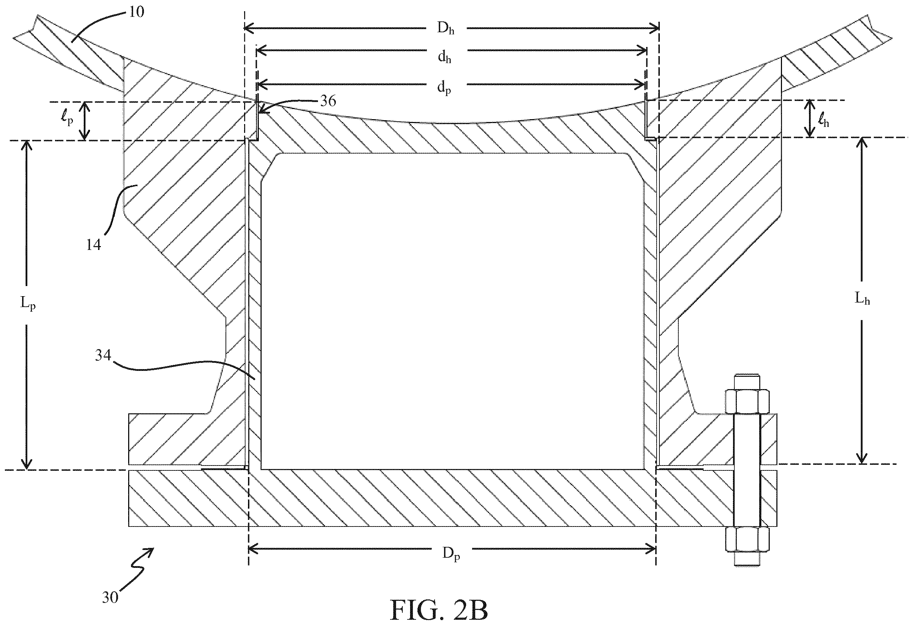

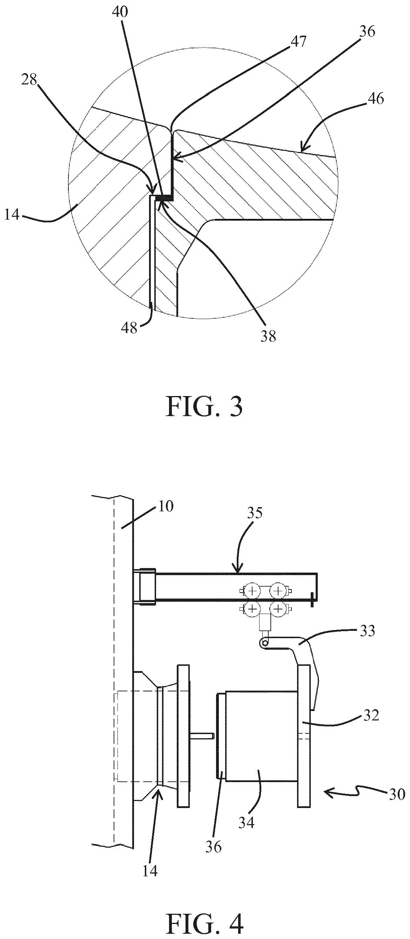

Figs. 2, 2B and 3 show certain embodiments of a manhole according to the disclosure.

A polymerization unit such as a reactor has a wall 10 provided with an opening to allow carrying out of inspection and maintenance activities. A hollow body14 is mounted on the opening of wall 10. The hollow body14 has a cylindrical through-hole comprising a first hole portion 22 and a second hole portion 24, the latter being in communication/contact with the inside of the polymerization unit. The first hole portion 22 has a length (Lₕ) and a diameter (Dₕ) larger than the length (lₕ) and diameter (dₕ) of said second hole portion 24, namely Lₕ > lₕ and Dₕ > dₕ. Therefore, a shoulder 28 is formed between the first 22 and second 24 hole portions of hollow body 14.

A closure member 30 can be inserted in the through-hole of hollow body14 to seal the inside 26 of the reactor. The closure member 30 comprises a cover plate 32 and a plug formed with a first plug portion 34 and a second plug portion 36. The first plug portion 34 has a length (Lₚ) and a diameter (Dₚ), respectively, larger than the length (lₚ) and diameter (dₚ) of the second plug portion 36. Therefore, a shoulder 38 is formed between the first 22 and second 24 plug portions of closure member 30. The length (Lₕ) and a diameter (Dₕ) of the first and second hole portions 22, 24 correspond substantially to the length (Lₚ) and a diameter (Dₚ) of the first and second plug portions 34, 36, the latter being slightly smaller to allow sliding into the former with clearance. When the plug of the closure member 30 is pushed into the hole of hollow body14, shoulder 38 abuts shoulder 28 of the through-hole of the hollow body. In this position, the cover plate 32 of the closure member 30 abuts the top part of hollow body14, so that the manhole is closed.

A ring gasket 40 is housed on shoulder 28 or on shoulder 38, to ensure sealing. A ring gasket 42 is also housed between cover plate 32 and hollow body 14, to ensure sealing. Gasket 40 and 42 are any type of ring gasket for polymer production use, as known to a skilled person. Fastening means 44, for example nuts and bolts, removably fasten the closure member 30 to hollow body 14.

The second portion 36 of the plug has an end wall 46 facing the inside of the reactor. The end wall 46 matches the shape of the inner wall of the reactor, so that a uniform and continuous surface is formed within the reactor when the opening is closed by the manhole. For example, if the reactor has a cylindrical wall, the end wall 46 of the closure member will have a curved shape matching the cylindrical shape of the reactor wall.

According to an aspect of the present disclosure, and with reference to Fig. 3, the first clearance 48, namely the radial gap between the first plug portion 34 and the first hole portion 22, is larger than the second clearance 47, namely the radial gap between the second plug portion 36 and the second hole portion 24. This feature allows smooth insertion and removal of the closure member 30 in the through-hole of hollow body 14, since a precise alignment of the plug into the hole is required only for sliding the second plug portion 36 into the second hole portion 24, where the second clearance 47 is small, typically 1 mm or less, preferably about 0.5 mm. In contrast, the first clearance 48 between the first plug portion 34 and the first hole portion 22 is larger than 1 mm, preferably about 2 mm. The small clearance 47, for example of about 0.5 mm, prevents polymer particles from entering the gap between closure member 30 and hole of the flange, thereby sealing the hole.

In one embodiment, the length Lₕ of the first portion 22 of the through-hole of the hollow body is at least twice the length lₕ of the second portion 24 of the hole, namely Lₕ > 2•lₕ.

Fig. 4 shows a lifting system of the manhole described above, comprising lifting lugs 33 hinged to a mounting bracket 35, as known to a skilled person.

Therefore, the structure of the improved manhole according to the present disclosure allows both smooth insertion and removal of the closure member and sealing of the opening in the reactor wall without the deposition of polymer particles that could block the closure member.

Embodiments of the manhole described above require that the through-hole of the hollow body is directly formed with a shoulder 28. There are cases, however, in which it would be desirable to use the improved manhole structure but the existing hollow body is not formed with a through-hole having a shoulder 28. It would therefore be desirable to provide a manhole that is adapted to be used in such cases.

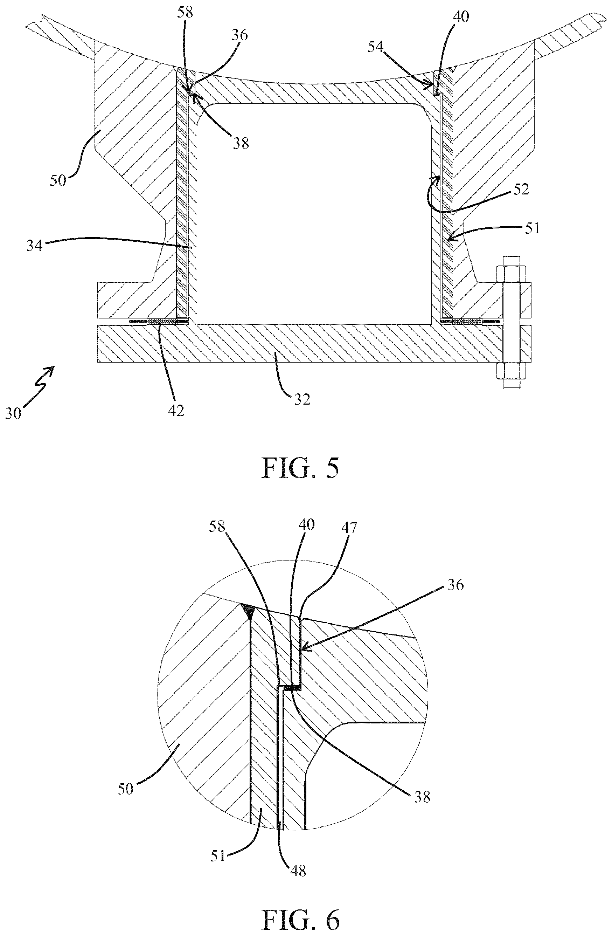

With reference to Figs. 5 and 6, a manhole encompassing additional embodiments of the disclosure are shown and described.

In additional embodiments, a hollow body 50 has a through-hole with a straight wall, namely, there is no shoulder, as in the case of the manhole according to the prior art shown in Fig. 1. Therefore, according to these embodiments of the disclosure, the hollow body is provided with a sleeve 51 fitting exactly into the through hole of the flange, without any clearance. Sleeve 51 may be welded to the manhole.

Sleeve 51 has a cylindrical through-hole comprising a first hole portion 52 and a second hole portion 54, this latter being in communication/contact with the inside of the polymerization unit. The first hole portion 52 has a length (Lₕ) and a diameter (Dₕ) larger than the length (lₕ) and diameter (dₕ) of said second hole portion 54, namely Lₕ > lₕ and Dₕ > dₕ. As a result of this structure, a shoulder 58 is formed between the first 52 and second 54 hole portions of sleeve 51. Therefore, sleeve 51 provides a through-hole with the same feature as described in connection with Figs. 2 and 3, so that the same closure member can be used to close the opening of the reactor. The same reference numbers as in Figs. 2 and 3 will thus be used in the following for the closure member 30.

The closure member 30 comprises a cover plate 32 and a plug formed with a first plug portion 34 and a second plug portion 36. The first plug portion 34 has a length (Lₚ) and a diameter (Dₚ), respectively, larger than the length (lₚ) and diameter (dₚ) of the second plug portion 36. As a result of this structure, a shoulder 38 is formed between the first 34 and second 36 plug portions of the closure member 30. The length and diameter of the first and second hole portions 52, 54 correspond to the length and diameter of the first and second plug portions 34, 36, the latter being slightly smaller to allow sliding into the former with clearance. When the plug of the closure member 30 is pushed into the hole of sleeve 51, shoulder 38 abuts shoulder 28 of the through-hole of the sleeve. In this position, the cover plate 32 of the closure member 30 abuts the top part of hollow body 50 and sleeve 51, so that the opening of the reactor is closed. A ring gasket 40 is placed between shoulders 38 and 58, and a ring gasket 42 is placed between cover plate 32 and hollow body 50 with sleeve 51, to ensure sealing.

As described in connection with aforementioned embodiments, the second portion 36 of the plug has an end wall 46 facing the inside of the reactor. The end wall 46 matches the shape of the inner wall of the reactor, so that a uniform and continuous surface is formed within the reactor when the opening is closed by the closure member 30.

The same features described above concerning clearance between sleeve 51 and cylindrical portions of the closure member 30 apply. As shown in Fig. 6, the first clearance 48 between the first plug portion 34 and the first hole portion 52 is larger than the second clearance 47 between the second plug portion 36 and the second hole portion 54. This feature allows for smooth insertion and removal of the closure member 30 in the through-hole of sleeve 51, since a more precise alignment of the plug into the hole is required only for sliding the second plug portion 36 into the second hole portion 54, where the clearance is small, typically 1 mm or less, preferably about 0.5 mm. In contrast, the clearance 47 is larger than 1 mm, preferably about 2 mm. The small clearance 49, for example about 0.5 mm, prevents polymer particles from entering the gap between closure member 30 and the hole of the sleeve, thereby sealing the hole.

In one embodiment, the length Lₕ of the first portion 52 of the through-hole of the sleeve is at least twice the length lₕ of the second portion 54 of the hole, namely Lₕ > 2•lₕ.

Therefore, embodiments of the present disclosure allow for both smooth insertion and removal of the closure member and sealing of the opening in the reactor wall without the deposition of polymer particles that could block the closure member. The improved design can be retrofit to existing manholes through a relatively simple modification.

## Claims

1. A polymerization unit comprising an improved manhole mounted on an opening in a wall (10) of said polymerization unit, said manhole comprising a hollow body (14; 50) mounted in said opening and projecting from said wall (10) of said polymerization unit, said hollow body (14; 50) comprising a cylindrical hole aligned with said opening of said polymerization unit, and a closure member (30) provided with a cover plate (32), wherein:
- said cylindrical hole of said hollow body (14; 50) comprises a first hole portion (22; 52) and a second hole portion (24; 54) in communication with the inside (26) of said polymerization unit, said first hole portion (22; 52) having a diameter (Dₕ) and said second hole portion (24; 54) having a diameter (dₕ), said diameter (Dₕ) of said first hole portion (22; 52) being larger than the diameter (dₕ) of said second hole portion (24; 54), whereby a shoulder (28; 58) is formed between said first (22; 52) and second (24; 54) hole portions of said hollow body (14; 50);
- said closure member (30) comprises a cylindrical plug operatively inserted in said cylindrical hole of said hollow body (14; 50), said cylindrical plug comprising a first plug portion (34) having a diameter (Dₚ), and a second plug portion (36) having a diameter (dₚ), said diameter (Dₚ) of said first plug portion (34) being larger than diameter (dₚ) of said second plug portion (36), said first (34) and second (36) plug portions forming a shoulder (38) operatively abutting against said shoulder (28; 58) formed in said hollow body (14; 50), said second plug portion (36) having an end wall (46) matching the shape of the inner wall (10) of said polymerization unit, whereby said wall (10) of said polymerization unit is continuous when said closure member (30) is inserted in said flange.

2. The polymerization unit of claim 1, wherein:
- the diameter (Dₚ) of the first plug portion (34) of said closure member (30) is smaller than the diameter (Dₕ) of the first hole portion (22; 52) of said hollow body (14; 50), whereby a first clearance (48) between the first plug portion and the first hole portion is originated; and
- the diameter (dₚ) of the second plug portion (36) of said closure member (30) is smaller than the diameter (dₕ) of the second hole portion (24; 54) of said hollow body (14; 50), whereby a second clearance (47) between the second plug portion and the second hole portion is originated,
wherein said first clearance (48) is larger than said second clearance (47).

3. The polymerization unit of claim 1, wherein said first clearance (48) is larger than 1 mm, preferably about 2 mm.

4. The polymerization unit of claim 1, wherein said second clearance (47) is 1 mm or less, preferably about 0.5 mm.

5. The polymerization unit of claim 1, wherein said first hole portion (22; 52) has a length (Lₕ) larger than the length (lₕ) of said second hole portion(24; 54); and said first plug portion (34) has length (Lp) larger than the length (lₚ) of said second plug portion (36), respectively.

6. The polymerization unit of claim 1, wherein said first hole portion (22;52) is at least twice the length (lₕ) of said second hole portion (24;54).

7. The polymerization unit of claim 1, wherein said hollow body (50) comprises a sleeve (51) provided with said cylindrical hole and comprising a first hole portion (52) and a second hole portion (54) in communication with the inside (26) of said polymerization unit, said first hole portion (52) having a diameter (Dₕ) larger than the diameter (dₕ) of said second hole portion (54), whereby a shoulder (58) is formed between said first (52) and second (54) hole portions.

8. The polymerization unit of claim 7, wherein:
- the diameter (Dₚ) of the first plug portion (34) of said closure member (30) is smaller than the diameter (Dₕ) of the first hole portion (52) of said sleeve (51) of said hollow body (50), whereby a first clearance (48) between the first plug portion and the first hole portion is originated; and
- the diameter (dₚ) of the second plug portion (36) of said closure member (30) is smaller than the diameter (dₕ) of the second hole portion (54) of said sleeve (51) of said hollow body (50), whereby a second clearance (47) between the second plug portion and the second hole portion is originated,
wherein said first clearance (48) is larger than said second clearance (47).

9. The polymerization unit of claim 8, wherein said first clearance (48) is larger than 1 mm, preferably about 2 mm.

10. The polymerization unit of claim 8, wherein said second clearance (47) is 1 mm or less, preferably about 0.5 mm.

11. The polymerization unit of claim 7, wherein said first hole portion (52) has a length (Lₕ) larger than the length (lₕ) of said second hole portion (54); and said first plug portion (34) has length (Lp) larger than the length (lₚ) of said second plug portion (36), respectively.

12. The polymerization unit of claim 11, wherein the length (Lₕ) of said first hole portion (52) is at least twice the length (lₕ) of said second hole portion (54).

13. The polymerization unit of claim 1, further comprising a ring gasket housed between said shoulder (38) of said plug and said shoulder (28; 58) of said hollow body.

## Patentansprüche

1. Polymerisationseinheit, umfassend einen verbesserten Schacht, der auf einer Öffnung in einer Wand (10) der Polymerisationseinheit montiert ist, wobei der Schacht einen Hohlkörper (14; 50) umfasst, der in der Öffnung montiert ist und aus der Wand (10) der Polymerisationseinheit vorspringt, wobei der Hohlkörper (14; 50) ein zylindrisches Loch, das mit der Öffnung der Polymerisationseinheit ausgerichtet ist, und ein Verschlusselement (30) umfasst, das mit einer Abdeckplatte (32) ausgestattet ist, wobei:
- das zylindrische Loch des Hohlkörpers (14; 50) einen ersten Lochabschnitt (22; 52) und einen zweiten Lochabschnitt (24; 54) in Kommunikation mit dem Innenraum (26) der Polymerisationseinheit umfasst, wobei der erste Lochabschnitt (22; 52) einen Durchmesser (Dₕ) aufweist, und der zweite Lochabschnitt (24; 54) einen Durchmesser (dₕ) aufweist, wobei der Durchmesser (Dₕ) des ersten Lochabschnitts (22; 52) größer als der Durchmesser (dₕ) des zweiten Lochabschnitts (24; 54) ist, wodurch eine Schulter (28; 58) zwischen dem ersten (22; 52) und dem zweiten (24; 54) Lochabschnitt des Hohlkörpers (14; 50) gebildet wird;
- das Verschlusselement (30) einen zylindrischen Stopfen umfasst, der in Wirkbeziehung in das zylindrische Loch des Hohlkörpers (14; 50) eingesetzt wird, wobei der zylindrische Stopfen einen ersten Stopfenabschnitt (34) mit einem Durchmesser (Dₚ) und einen zweiten Stopfenabschnitt (36) mit einem Durchmesser (dₚ) umfasst, wobei der Durchmesser (Dₚ) des ersten Stopfenabschnitts (34) größer als der Durchmesser (dₚ) des zweiten Stopfenabschnitts (36) ist, der erste (34) und der zweite (36) Stopfenabschnitt eine Schulter (38) bilden, die in Wirkbeziehung an der Schulter (28; 58) anliegt, die in dem Hohlkörper (14; 50) gebildet ist, der zweite Stopfenabschnitt (36) eine Endwand (46) aufweist, die der Form der Innenwand (10) der Polymerisationseinheit entspricht, wodurch die Wand (10) der Polymerisationseinheit kontinuierlich ist, wenn das Verschlusselement (30) in den Flansch eingesetzt wird.

2. Polymerisationseinheit nach Anspruch 1, wobei:
- der Durchmesser (Dₚ) des ersten Stopfenabschnitts (34) des Verschlusselements (30) kleiner als der Durchmesser (Dₕ) des ersten Lochabschnitts (22; 52) des Hohlkörpers (14; 50) ist, wodurch ein erstes Spiel (48) zwischen dem ersten Stopfenabschnitt und dem ersten Lochabschnitt erzeugt wird; und
- der Durchmesser (dₚ) des zweiten Stopfenabschnitts (36) des Verschlusselements (30) kleiner als der Durchmesser (dₕ) des zweiten Lochabschnitts (24; 54) des Hohlkörpers (14; 50) ist, wodurch ein zweites Spiel (47) zwischen dem zweiten Stopfenabschnitt und dem zweiten Lochabschnitt erzeugt wird,
wobei das erste Spiel (48) größer als das zweite Spiel (47) ist.

3. Polymerisationseinheit nach Anspruch 1, wobei das erste Spiel (48) größer als 1 mm ist, vorzugsweise etwa 2 mm.

4. Polymerisationseinheit nach Anspruch 1, wobei das zweite Spiel (47) 1 mm oder kleiner ist, vorzugsweise etwa 0,5 mm.

5. Polymerisationseinheit nach Anspruch 1, wobei der erste Lochabschnitt (22; 52) eine Länge (Lₕ) größer als die Länge (lₕ) des zweiten Lochabschnitts (24; 54) aufweist; und der erste Stopfenabschnitt (34) eine Länge (Lₚ) aufweist, die größer als die Länge (lₚ) des zweiten Stopfenabschnitts (36) ist.

6. Polymerisationseinheit nach Anspruch 1, wobei der erste Lochabschnitt (22; 52) mindestens das Doppelte der Länge (lₕ) des zweiten Lochabschnitts (24; 54) aufweist.

7. Polymerisationseinheit nach Anspruch 1, wobei der Hohlkörper (50) eine Hülse (51) umfasst, die mit dem zylindrischen Loch bereitgestellt wird und einen ersten Lochabschnitt (52) und einen zweiten Lochabschnitt (54) in Kommunikation mit dem Innenraum (26) der Polymerisationseinheit umfasst, wobei der erste Lochabschnitt (52) einen Durchmesser (Dₕ) aufweist, der größer als der Durchmesser (dₕ) des zweiten Lochabschnitts (54) ist, wodurch eine Schulter (58) zwischen dem ersten (52) und dem zweiten (54) Lochabschnitt gebildet wird.

8. Polymerisationseinheit nach Anspruch 7, wobei:
- der Durchmesser (Dₚ) des ersten Stopfenabschnitts (34) des Verschlusselements (30) kleiner als der Durchmesser (Dₕ) des ersten Lochabschnitts (52) der Hülse (51) des Hohlkörpers (50) ist, wodurch ein erstes Spiel (48) zwischen dem ersten Stopfenabschnitt und dem ersten Lochabschnitt erzeugt wird; und
- der Durchmesser (dₚ) des zweiten Stopfenabschnitts (36) des Verschlusselements (30) kleiner als der Durchmesser (dₕ) des zweiten Lochabschnitts (54) der Hülse (51) des Hohlkörpers (50) ist, wodurch ein zweites Spiel (47) zwischen dem zweiten Stopfenabschnitt und dem zweiten Lochabschnitt erzeugt wird, wobei das erste Spiel (48) größer als das zweite Spiel (47) ist.

9. Polymerisationseinheit nach Anspruch 8, wobei das erste Spiel (48) größer als 1 mm ist, vorzugsweise etwa 2 mm.

10. Polymerisationseinheit nach Anspruch 8, wobei das zweite Spiel (47) 1 mm oder kleiner ist, vorzugsweise etwa 0,5 mm.

11. Polymerisationseinheit nach Anspruch 7, wobei der erste Lochabschnitt (52) eine Länge (Lₕ) größer als die Länge (lₕ) des zweiten Lochabschnitts (54) aufweist; und der erste Stopfenabschnitt (34) eine Länge (Lₚ) aufweist, die größer als die Länge (lₚ) des zweiten Stopfenabschnitts (36) ist.

12. Polymerisationseinheit nach Anspruch 11, wobei die Länge (Lₕ) des ersten Lochabschnitts (52) mindestens das Doppelte der Länge (lₕ) des zweiten Lochabschnitts (54) beträgt.

13. Polymerisationseinheit nach Anspruch 1, des Weiteren umfassend eine Ringdichtung, die zwischen der Schulter (38) des Stopfens und der Schulter (28; 58) des Hohlkörpers untergebracht ist.

## Revendications

1. Unité de polymérisation comprenant un trou d'homme amélioré monté sur une ouverture dans une paroi (10) de ladite unité de polymérisation, ledit trou d'homme comprenant un corps creux (14 ; 50) monté dans ladite ouverture et faisant saillie à partir de ladite paroi (10) de ladite unité de polymérisation, ledit corps creux (14 ; 50) comprenant un trou cylindrique aligné avec ladite ouverture de ladite unité de polymérisation et un élément de fermeture (30) pourvu d'une plaque de recouvrement (32) :
- ledit trou cylindrique dudit corps creux (14 ; 50) comprenant une première partie de trou (22 ; 52) et une deuxième partie de trou (24 ; 54) en communication avec l'intérieur (26) de ladite unité de polymérisation, ladite première partie de trou (22 ; 52) présentant un diamètre (Dₕ) et ladite deuxième partie de trou (24 ; 54) présentant un diamètre (dₕ), ledit diamètre (Dₕ) de ladite première partie de trou (22 ; 52) étant plus grand que le diamètre (dₕ) de ladite deuxième partie de trou (24 ; 54), moyennant quoi un épaulement (28 ; 58) est formé entre ladite première (22 ; 52) et ladite deuxième (24 ; 54) partie de trou dudit corps creux (14 ; 50) ;
- ledit élément de fermeture (30) comprenant un bouchon cylindrique inséré de manière fonctionnelle dans ledit trou cylindrique dudit corps creux (14 ; 50), ledit bouchon cylindrique comprenant une première partie de bouchon (34) présentant un diamètre (Dₚ) et une deuxième partie de bouchon (36) présentant un diamètre (dₚ), ledit diamètre (Dₚ) de ladite première partie de bouchon (34) étant plus grand que le diamètre (dₚ) de ladite deuxième partie de bouchon (36), ladite première (34) et ladite deuxième (36) partie de bouchon formant un épaulement (38) venant en butée de manière fonctionnelle contre ledit épaulement (28 ; 58) formé dans ledit corps creux (14 ; 50), ladite deuxième partie de bouchon (36) présentant une paroi d'extrémité (46) correspondant à la forme de la paroi interne (10) de ladite unité de polymérisation, moyennant quoi ladite paroi (10) de ladite unité de polymérisation étant continue lorsque ledit élément de fermeture (30) est inséré dans ladite bride.

2. Unité de polymérisation selon la revendication 1 :
- le diamètre (Dₚ) de la première partie de bouchon (34) dudit élément de fermeture (30) étant plus petit que le diamètre (Dₕ) de la première partie de trou (22 ; 52) dudit corps creux (14 ; 50), moyennant quoi un premier jeu (48) est créé entre la première partie de bouchon et la première partie de trou ; et
- le diamètre (dₚ) de la deuxième partie de bouchon (36) dudit élément de fermeture (30) étant plus petit que le diamètre (dₕ) de la deuxième partie de trou (24 ; 54) dudit corps creux (14 ; 50), moyennant quoi un deuxième jeu (47) est créé entre la deuxième partie de bouchon et la deuxième partie de trou, ledit premier j eu (48) étant plus grand que ledit deuxième jeu (47).

3. Unité de polymérisation selon la revendication 1, ledit premier jeu (48) étant plus grand que 1 mm, préférablement d'environ 2 mm.

4. Unité de polymérisation selon la revendication 1, ledit deuxième jeu (47) étant de 1 mm ou moins, préférablement d'environ 0,5 mm.

5. Unité de polymérisation selon la revendication 1, respectivement ladite première partie de trou (22 ; 52) présentant une longueur (Lₕ) plus grande que la longueur (lₕ) de ladite deuxième partie de trou (24 ; 54) ; et ladite première partie de bouchon (34) présentant une longueur (Lₚ) plus grande que la longueur (lₚ) de ladite deuxième partie de bouchon (36).

6. Unité de polymérisation selon la revendication 1, ladite première partie de trou (22 ; 52) présentant au moins deux fois la longueur (lₕ) de ladite deuxième partie de trou (24 ; 54).

7. Unité de polymérisation selon la revendication 1, ledit corps creux (50) comprenant un manchon (51) pourvu dudit trou cylindrique et comprenant une première partie de trou (52) et une deuxième partie de trou (54) en communication avec l'intérieur (26) de ladite unité de polymérisation, ladite première partie de trou (52) présentant un diamètre (Dₕ) plus grand que le diamètre (dₕ) de ladite deuxième partie de trou (54), moyennant quoi un épaulement (58) étant formé entre ladite première (52) et ladite deuxième (54) partie de trou.

8. Unité de polymérisation selon la revendication 7 :
- le diamètre (Dₚ) de la première partie de bouchon (34) dudit élément de fermeture (30) étant plus petit que le diamètre (Dₕ) de la première partie de trou (52) dudit manchon (51) dudit corps creux (50), moyennant quoi un premier jeu (48) est créé entre la première partie de bouchon et la première partie de trou ; et
- le diamètre (dₚ) de la deuxième partie de bouchon (36) dudit élément de fermeture (30) étant plus petit que le diamètre (dₕ) de la deuxième partie de trou (54) dudit manchon (51) dudit corps creux (50), moyennant quoi un deuxième jeu (47) est créé entre la deuxième partie de bouchon et la deuxième partie de trou, ledit premier j eu (48) étant plus grand que ledit deuxième jeu (47).

9. Unité de polymérisation selon la revendication 8, ledit premier jeu (48) étant plus grand que 1 mm, préférablement d'environ 2 mm.

10. Unité de polymérisation selon la revendication 8, ledit deuxième jeu (47) étant de 1 mm ou moins, préférablement d'environ 0,5 mm.

11. Unité de polymérisation selon la revendication 7, respectivement ladite première partie de trou (52) présentant une longueur (Lₕ) plus grande que la longueur (lₕ) de ladite deuxième partie de trou (54) ; et ladite première partie de bouchon (34) présentant une longueur (Lₚ) plus grande que la longueur (lₚ) de ladite deuxième partie de bouchon (36).

12. Unité de polymérisation selon la revendication 11, la longueur (Lₕ) de ladite première partie de trou (52) présentant au moins deux fois la longueur (lₕ) de ladite deuxième partie de trou (54).

13. Unité de polymérisation selon la revendication 1, comprenant en outre un joint annulaire logé entre ledit épaulement (38) dudit bouchon et ledit épaulement (28 ; 58) dudit corps creux.
